# EUROPÄISCHE PATENTSCHRIFT

(11) **EP 1 424 130 B1**
(45) Veröffentlichungstag und Bekanntmachung des Hinweises auf die Patenterteilung: **02.01.2008**
(21) Anmeldenummer: 03027084.7
(22) Anmeldetag: 25.11.2003
(51) Int. Cl.: B01L 3/02, G01N 35/10

(54) **Mehrkanaldosiervorrichtung mit automatischer Kalibrierung**
Multichannel dispenser with automatic calibration
Distributeur à canaux multiples avec calibrage automatique

(30) Priorität: 26.11.2002 DE 10255595
(43) Veröffentlichungstag der Anmeldung: 02.06.2004
(73) Patentinhaber: CyBio AG, 07745 Jena (DE)
(72) Erfinder: Zimmermann, Peter, 07768 Kahla (DE); Rausch, Torsten, 07745 Jena (DE); Heisse, Gerd, 07745 Jena (DE); Köberich, Hartmut, 07768 Kahla (DE); Renard, Simon, 07749 Jena (DE); Moore, Thomas, 07751 Drackendorf (DE); Krämer, Wolfgang, 07749 Jena (DE)
(74) Vertreter: Schaller, Renate

(56) Entgegenhaltungen:
- EP-A- 0 810 438
- EP-A- 1 036 594
- WO-A-01/62387
- WO-A-02/33423

## Beschreibung

Die Erfindung betrifft eine Mehrkanaldosiervorrichtung, wie sie gattungsgemäß aus der WO 02/33423 bekannt ist.

Für Mehrkanaldosiervorrichtungen, die heute vorrangig in vollautomatischen Laborgeräten in der pharmakologischen, molekularbiologischen, biochemischen und chemischen Forschung eingesetzt werden, steht grundsätzlich die permanente Aufgabe, eine Vielzahl von winzigen Volumina (Tests) flüssiger Reagenzien (Dispensierflüssigkeit) in kürzester Zeit örtlich und mengenmäßig präzise dosiert auf einen Träger, z.B. eine Mikrotitrationsplatte abzugeben. Die mengenmäßig präzise Dosierung ist entsprechend ein wesentliches Leistungsmerkmal für Mehrkanaldosiervorrichtungen. Dabei ist eine geringe Schwankungsbreite der Volumina über alle Dispensierkanäle im parallelen Betrieb oft von höherem Stellenwert als die Schwankungsbreite der Volumina über einen einzelnen Dispensierkanal im seriellen Betrieb. Um eine geringe Schwankungsbreite der Volumina und damit einen geringen Variationskoeffizienten zu erzielen, werden für die aus dem Stand der Technik gattungsgleichen Vorrichtungen unterschiedliche Maßnahmen getroffen.
Im Unterschied zu vergleichbaren Vorrichtungen für die Drucktechnik sollen Mehrkanaldosiervorrichtungen auch geeignet sein, Flüssigkeiten unterschiedlicher physikalischer Eigenschaften, wie der Viskosität, zu dispensieren oder Muster aus Tests unterschiedlicher Dispensierflüssigkeiten und/oder Volumina zu erstellen.

Gattungsgleiche Dosiervorrichtungen unterscheiden sich unter anderem in der Art und Weise, wie die Dispensierflüssigkeit zur jeweiligen Auslassöffnung eines Dispensierkanals (Spitze bzw. Düse) gelangt und mit welchen technischen Mitteln eine dosierte Abgabe bewirkt wird.
Bezüglich der Aufnahme der Dispensierflüssigkeit unterscheiden sich bekannte Vorrichtungen in solche, bei denen die Dispensierflüssigkeit über die Auslassöffnung (von vorn) angesaugt wird (pick up dispenser) und solche, bei denen die Dispensierflüssigkeit von hinten zur Auslassöffnung gefördert wird (bulk reagent dispenser). Zur Unterscheidung wird die Auslassöffnung bei pick up dispensern als Spitze und bei bulk reagent dispensern als Düse bezeichnet.

Teilt man die bekannten Vorrichtungen danach ein, mit welchen Mitteln eine dosierte Abgabe erfolgt, so ist erst einmal grundsätzlich zu unterscheiden in technische Lösungen, bei denen die Abgabe nur über alle Spitzen/Düsen gemeinsam gesteuert (mani fold Systeme) und solche, bei denen die Abgabe jeder einzelnen Spitze/Düse gesteuert erfolgen kann (multi single channel Systeme).

Um mit einem mani fold System über alle Düsen gleichzeitig ein gleiches Volumen abgeben zu können, sind aus dem Stand der Technik insbesondere unterschiedliche Verteilerstrukturen bekannt, mit denen die Dispensierflüssigkeit aus einem gemeinsamen Vorratsbehälter auf die Düsen gleichmäßig verteilt werden soll. Solche Verteilerstrukturen sind beispielsweise in der US 5,441,204 und im EP 1 036 594 offenbart. Die gleichmäßige Abgabe der Tropfen ist in der US 5,441,204 durch ein elektrostatisches Prinzip realisiert, indem die kontinuierlich geförderte Flüssigkeit elektrostatisch aufgeladen und durch ein elektrisches Feld von der Oberfläche der Spitze abgelöst wird. In der EP 1 036 594 wird die Flüssigkeit mit einer hohen Geschwindigkeit über eine elastische Verbindung und einen Verteiler zu den Auslässen befördert. Bei abruptem Stop des Flüssigkeitsstromes, der kurzzeitig aufgrund der Trägheit bestehen bleibt und dadurch ein Zusammenziehen der elastischen Verbindung bewirkt, reißt der Strahl aufgrund der hohen kinetischen Energie ab, ohne einen Tropfen zu bilden. Flüssigkeitsreste werden mit dem Entspannen der Verbindung aus den Auslässen zurückgezogen.

Diese technische Lösungen setzen zwingend voraus, dass alle Düsen aus einem gemeinsamen Vorratsbehälter gespeist werden, wodurch über alle Düsen immer nur die gleiche Dispensierflüssigkeit abgegeben werden kann. Es besteht damit nicht die Möglichkeit, ein Testmuster unterschiedlicher Dispensierflüssigkeiten zu erstellen. Auch kann in der Abgabemenge der Düsen untereinander nicht differenziert werden.

In der Patentanmeldung WO 00/01798 ist eine Mehrkanaldosiervorrichtung beschrieben, bei der alle Düsen sowohl aus einem gemeinsamen als auch aus unterschiedlichen Vorratsbehältern befüllt und auch gezielt unterschiedliche Volumina abgegeben werden können.
Die einzelnen Düsen bilden jeweils mit einer Spritzenpumpe, einer elastischen Verbindung und einem Ventil zueinander unabhängige Dispensierkanäle. Über den definierten Hub der Spritzenpumpe wird in die mit Dispensierflüssigkeit gefüllte elastische Verbindung ein zusätzliches Volumen eingebracht, welches zu einer Ausdehnung und damit zu einem Überdruck in der am anderen Ende mittels des Ventils geschlossenen Verbindung kommt. Mit dem Öffnen des Ventils wird genau dieses zusätzliche Volumen abgegeben.

Im US Patent 5,741,554 ist eine Dosiervorrichtung mit einer Druckpumpe und einem konventionellen Ventil beschrieben. Die Druckpumpe, eine Spritzenpumpe gefüllt mit Dispensierflüssigkeit, ist mit einem Schlauch verbunden, an dessen anderem Ende nahe der Düse ein Magnetventil angeordnet ist. Der Kolben der Spritzenpumpe wird motorisch mit einer definierten Geschwindigkeit angetrieben, die für die Durchflussrate bestimmend ist. Gemeinsam mit der Frequenz des Ventils bestimmt sie das dispensierte Volumen. Wenn die Pumpe z.B. eine Durchflussrate von 1 ml/s erzeugt und die Frequenz des Öffnungs-/Schließzyklus des Ventils 100 pro Sekunde beträgt, ist die Tropfengröße 10 nl.

Die aufgezeigten Grundprinzipien für die Dosierung des Dispensiervolumens, nämlich über einen Weg (Hub der Spritzenpumpe) und/oder eine Zeit (Öffnungszeit des Ventils) lassen sich mit einer Vielzahl weiterer Beschreibungen belegen.
Bei allen diesen technischen Lösungen ist es eine permanente Aufgabe, dass der Variationskoeffizient (CV) (Abweichung der einzelnen Dispensionsvolumina von deren Mittelwert) im seriellen Betrieb des Einzeldispensierers (Dispensierkanal) möglichst klein gehalten wird. Variationskoeffizienten von kleiner 2% bei einer Volumenabgabe von 500 nl und kleiner 5% bei 50 nl sind typisch. Einen Variationskoeffizienten, bezogen auf den Mittelwert aller Einzeldispensierer (Dispensierkanäle) einer Mehrkanaldosiervorrichtung im parallelen Betrieb, geben die Hersteller in der Regel nicht an. Schon allein aufgrund der mechanischen Toleranzen der Dispensierkanäle zueinander wird dieser erheblich größer sein.

Vermutlich erfolgt eine weitest mögliche Anpassung der Dispensierkanäle (Kanalabgleich) zueinander im Stand der Technik nur durch eine gezielte Auswahl der Komponenten bei der Montage der Module. Vorstellbar ist es auch, dass das Abgabevolumen der einzelnen Spitzen/Düsen der einzelnen Dispensierkanäle mit externen Messmitteln gemessen wird und aus den unterschiedlichen Messergebnissen unterschiedliche Steuersignale für die einzelnen Dispensierkanäle gebildet werden, um Toleranzen in der Volumenabgabe bei gleichem Hub der individuellen Spritzenpumpen bzw. gleicher Öffnungszeit der individuellen Ventile durch einen individuellen Hub bzw. eine individuelle Öffnungszeit auszugleichen. Eine solche Kalibrierung setzt das Vorhandensein geeigneter Messmittel voraus und kann nicht ohne weiteres an einer Mehrkanaldosiervorrichtung durchgeführt werden, die in einem Laborgerät integriert ist.
In der Patentanmeldung WO 02/33423 ist eine Dispensiervorrichtung beschrieben, bei der das Dispensiervolumen eines jeden Dispensierkanals jeweils über die Öffnungszeit des zugehörigen Ventils geregelt wird. In den einzelnen Dispensierkanälen sind Mittel zum Messen des Durchflussvolumens (Flusssensoren) vorhanden sowie elektronische Mittel, die auf die Messwerte der Flusssensoren reagierend das Ventil ansteuern. Eine vom Patentanmelder angebotene 8-Kanal-Dispensiervorrichtung, die auf die hier geschützte technische Lösung aufbaut, verspricht einen Variationskoeffizienten CV von kleiner 5 % (bezogen auf den Mittelwert über alle Dispensierkanäle) für eine Volumenabgabe im Bereich von 50 nl - 10 µl.
Vorteilhaft gegenüber den sonstig aufgezeigten Lösungen ist, dass nicht über die Steuerung einer Zeit oder eines Weges das Dispensiervolumen aller Dispensierkanäle bestimmt wird, sondern das Durchflussvolumen als Regelgröße für die Öffnungszeiten des jeweils zugeordneten einzelnen Ventils dient , womit eine Kalibrierung der Dispensierkanäle auf das Durchflussvolumen möglich wird. Sämtliche Toleranzen, die das Dosiervolumen bis hin zum Flusssensor beeinflussen können, bleiben ohne Einfluss auf den Variationskoeffizienten. Dafür gehen die Toleranzen der Flusssensoren direkt in die Regelgröße ein.
Nachteilig ist außerdem die zwingende Notwendigkeit der hohen Anzahl von Flusssensoren, die in gleicher Menge benötigt werden, wie die Vorrichtung Dispensierkanäle aufweist. Für den Fachmann verständlich müssen die Flusssensoren ein sehr kurzes Reaktionsvermögen haben, um eine möglichst genaue Volumenabgabe zu erreichen. Solche Flusssensoren sind technologisch aufwendig und wenig robust.

In der EP 0 810 438 B1 ist eine Mehrkanaldosiervorrichtung beschrieben, in der eine Flüssigkeit über einen Verteiler auf mehrere Dispensierkanäle aufgeteilt wird. Die Abgabe der Flüssigkeit erfolgt über Ventile, die in Abhängigkeit des am jeweiligen Ventil anliegenden Flüssigkeitsdruckes gesteuert werden. Zur Erfassung des Drucks sind den Ventilen der Dispensierkanäle jeweils ein Drucksensor vorgeordnet. Vergleichbar mit der WO 02/33423 ist es von Nachteil, dass pro Dispensierkanal ein Sensor erforderlich ist.

Es ist die Aufgabe der Erfindung, eine Mehrkanaldosiervorrichtung zu schaffen, die eine genauere automatische Kalibrierung der einzelnen Dispensierkanäle zueinander erlaubt.

Diese Aufgabe wird erfindungsgemäß mit den Merkmalen des Anspruches 1 gelöst.

Vorteilhafte Ausführungen sind in den Unteransprüchen beschrieben.

Es ist erfindungswesentlich, dass in einer Vorrichtung entsprechend einem multisingle-channel-System ein Flusssensor integriert wird und zwischen dem Flusssensor und jeder Düse Pfade gleichen fluidischen Widerstandes vorhanden sind. Das Messen des absoluten Durchflussvolumens, wofür ein Flusssensor üblicherweise verwendet wird, ist hier nicht die eigentliche Zielstellung, sondern nur Mittel zum Zweck der Kalibrierung.
Der besondere Vorteil der Erfindung besteht darin, dass der Variationskoeffizient (CV) über alle Dispensierkanäle für Mehrkanaldosiervorrichtungen mit zeitgesteuerten Mikroventilen wesentlich verbessert werden kann, indem die Wirkung der Haupteinflussfaktoren, die zu einer unterschiedlichen Volumenabgabe der einzelnen Dispensierkanäle führt, steuertechnisch aufgehoben wird. Haupteinflussfaktoren sind die mechanischen Toleranzen der einzelnen Verbindungen zu den Düsen, einschließlich der Ventile und Düsen (örtliche Toleranzen) sowie mögliche zeitliche Veränderungen, z.B. durch Ablagerungen an den Düsen oder Wechsel der Düsen, Temperaturänderungen und Alterung der Flüssigkeiten, die zur Änderung der Viskosität führen (zeitliche Toleranzen).
Zum Zweck der Kalibrierung werden die Mikroventile der einzelnen Dispensierkanäle zeitlich nacheinander für eine definierte Zeit geöffnet. Das vom Flusssensor pro Öffnungszeit jeweils erfasste Durchflussvolumen generiert ein Signal, das jeweils einem Dispensierkanal mit zugehörigem Mikroventil und einer Öffnungszeit zugeordnet abgespeichert wird. Zur Erhöhung der Genauigkeit kann auch das gleiche Mikroventil mehrfach hintereinander für die gleiche Zeit geöffnet werden und die entsprechenden Signale integriert werden und als Integrationssignal jeweils einem Mikroventil und einer Öffnungszeit zugeordnet abgespeichert werden. Aus den Speicherwerten, die jeweils einem Dispensierkanal und unterschiedlichen Öffnungszeiten zugeordnet werden können, werden durch Interpolation Messkurven für die einzelnen Dispensierkanäle gebildet. Mit Hilfe der Messkurven kann dann jedem praktisch sinnvollen Abgabevolumen eine Öffnungszeit für einen individuellen Dispensierkanal zugeordnet werden. Diese Messwertverarbeitung bis hin zur Abgabe der Steuersignale an die Mikroventile geschieht in einer Steuereinheit. Die Kalibrierung kann beliebig oft zwischen den Dispensiervorgängen wiederholt werden, um die Messkurven zu korrigieren. Durch die Integration nur eines Flusssensors kann mit geringem materiellen und technischen Aufwand eine Mehrkanaldosiervorrichtung geschaffen werden, die automatisch kalibrierbar ist.
Mit dem erfindungsgemäß angeordneten Flusssensor kann nicht nur eine Kalibrierung der Dispensierkanäle durchgeführt werden, sondern auch die Verstopfung der Düsen überwacht werden (anti clogging check). Dazu werden wie bei der Kalibrierung dem Volumendurchsatz proportionale Messwerte für die einzelnen Dispensierkanäle gebildet und mit zuvor gewonnenen Messwerten bei freien, nicht verstopften Düsen verglichen. Aus dem Vergleich lässt sich dann der Grad der Verstopfung der Düsen der einzelnen Dispensierkanäle ableiten.

Die Erfindung soll nachfolgend anhand von Zeichnungen an 3 Ausführungsbeispielen näher erläutert werden. Hierzu zeigen wie folgt:
- Fig. 1:: eine Prinzipdarstellung für ein erstes Ausführungsbeispiel, bei dem ein Flusssensor in einem Kalibriermittelpfad angeordnet ist,
- Fig. 2:: eine Prinzipdarstellung für ein zweites Ausführungsbeispiel, bei dem ein Flusssensor in einem Spülmittelpfad angeordnet ist,
- Fig. 3:: eine Prinzipdarstellung für ein drittes Ausführungsbeispiel, bei dem ein Flusssensor in einem Dosiermittelpfad angeordnet ist.

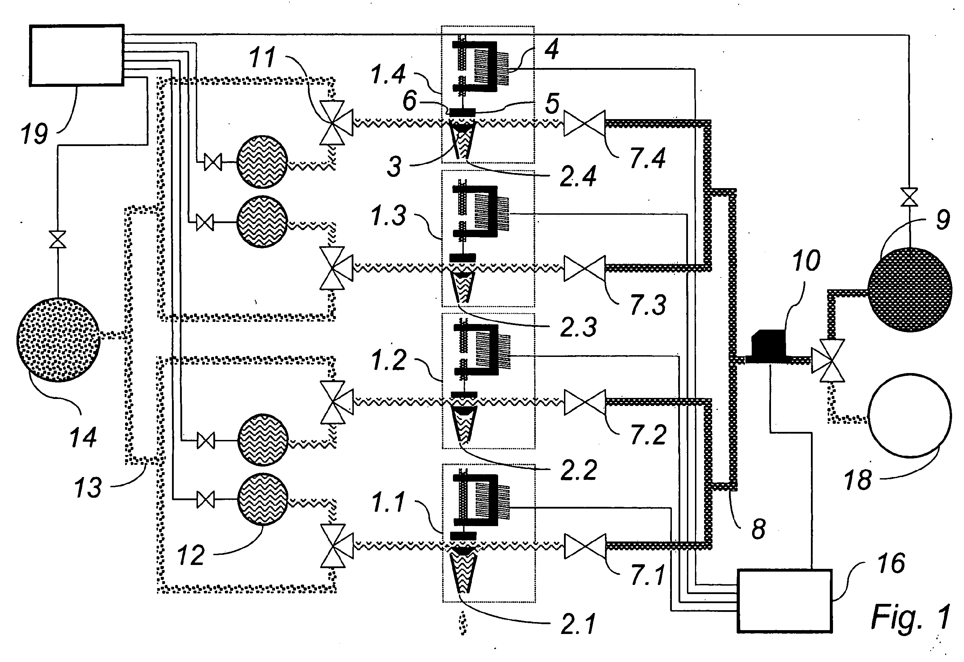

In Fig. 1 ist eine Prinzipskizze für ein erstes Ausführungsbeispiel einer erfindungsgemäßen Mehrkanaldosiervorrichtung, funktionierend nach dem Prinzip eines bulk reagent dispensers, mit vier Dispensierkanälen 1 (1.1 bis 1.4) dargestellt. Praktisch wird eine solche Vorrichtung eher mit acht oder einem Mehrfachen von acht Dispensierkanälen 1 ausgeführt, wobei eine erfindungsgemäße Vorrichtung unabhängig von der Anzahl der Dispensierkanäle 1 gleichermaßen von Vorteil ist. Ein Dispensierkanal 1 besteht jeweils aus einer Düse 2 (2.1 bis 2.4), die jeweils mit einer Auslassöffnung 3 eines Mikroventils 4 verbunden ist.
Die Mikroventile 4 verfügen jeweils über eine erste Zuführöffnung 5, die jeweils über ein Durchlassventil 7 (7.1-7.4) mit jeweils einem Ausgang eines Kalibriermittelverteilers 8 verbunden ist. Der Kalibriermittelverteiler 8 ist so aufgebaut, dass die über dessen einzigen Eingang eingespeiste Kalibrierflüssigkeit gleichmäßig auf die Dispensierkanäle 1 verteilt wird. D.h. die Pfade zwischen dem Eingang und den Ausgängen des Kalibriermittelverteilers 8 sind identisch und haben somit den gleichen fluidischen Widerstand. Im Pfad zwischen dem Eingang des Kalibriermittelverteilers 8 und einem vorgeordneten Kalibriermittelbehälter 9 ist ein Flusssensor 10 angeordnet. Zum Spülen der Vorrichtung kann der Kalibriermittelverteiler 8 zeitweise mit einem Spülmittelsammelbehälter 18 verbunden werden.
Eine jeweils zweite Zuführöffnung 6 eines jeden Mikroventils 4 ist jeweils über ein Ventil 11 wahlweise jeweils mit einem Dispensiermittelgefäß 12 bzw. einem der Ausgänge eines Spülmittelverteilers 13 verbunden. Der Spülmittelverteiler 13 ist so konzipiert, dass er die Spülflüssigkeit, die ihm über seinen einzigen Eingang aus einem Spülmittelgefäß 14 zugeführt wird, gleichmäßig auf die Dispensierkanäle 1 verteilt. Die Zuführöffnungen 5, 6 können bei geschlossenem Mikroventil 4 auch wechselweise zur Abführung der sie durchsetzenden Flüssigkeit dienen. Somit kann die Dispensierflüssigkeit auch über die Mikroventile 4 hinaus zum Kalibriermittelverteiler 8 hin gedrückt werden. Die sich daraus ergebenden Vorteile für die Kalibrierung sollen an späterer Stelle erläutert werden. Ein für die Vorrichtung geeignetes Mikroventil ist in der EP 1099480 beschrieben.
Die Gesamtvorrichtung stellt bei geschlossenen Mikroventilen 4 ein geschlossenes druckdichtes System dar. Alle Verbindungen zwischen den Gefäßen 9, 12, 14 und den Auslassöffnungen 3 der Mikroventile 4 sind entlüftet und mit einer der Flüssigkeiten gefüllt. Durch die Zuführung von Druckluft oder einem unter Druck stehenden Gas mittels einer Druckquelle 19, (z.B. elektronisch geregelte Pumpe, Druckluftflasche, Edelgasflasche) wahlweise in das Kalibriermittelgefäß 9, die Dispensiermittelgefäße 12 oder das Spülmittelgefäß 14 und ein hierzu korrelierendes Schalten der Ventile 11, der Durchlassventile 7 und der Mikroventile 4, kann über die Düsen 2 dispensiert werden.
Ein erfindungswesentliches Merkmal der Vorrichtung ist die Einbindung eines Flusssensors 10 zur automatischen Kalibrierung der Dispensierkanäle 1 zueinander. In dem ersten aufgezeigten Ausführungsbeispiel soll, wie bereits erwähnt, der Flusssensor 10 unmittelbar am Eingang des Kalibriermittelverteilers 8 angeordnet sein. Grundsätzlich ist eine Kalibrierung mit der Kalibrierflüssigkeit oder aber mit der Dispensierflüssigkeit vorteilhaft. Eine Kalibrierung mit der Spülflüssigkeit ist theoretisch ebenfalls möglich, hat aber bei diesem ersten Ausführungsbeispiel keine Vorteile gegenüber den anderen beiden Möglichkeiten.

Zur Kalibrierung der Dispensierkanäle 1 mit Kalibrierflüssigkeit müssen die beiden Flüssigkeitssäulen einerseits der Kalibrierflüssigkeit und andererseits der Dispensierflüssigkeit oder der Spülflüssigkeit aus Sicht des Flusssensors 10 hinter den Mikroventilen 4 zusammentreffen, d.h. an jeweils beiden Zuführöffnungen 5, 6 der Mikroventile 4 steht die Kalibrierflüssigkeit an. (in Fig. 1 steht hier die Dispensierflüssigkeit) Wird nun z.B. zur Kalibrierung des ersten Dispensierkanals 1.1 das erste Durchlassventil 7.1 geöffnet, während die anderen Durchlassventile 7.2 bis 7.4 geschlossen sind und Druckluft in das Kalibriermittelgefäß 9 eingeleitet, so wird die Kalibrierflüssigkeit durch die erste Düse 2.1 abgegeben, solange das erste Mikroventil 4geöffnet ist. Die Düse 2.1 wird jetzt nacheinander für verschiedene Zeiten geöffnet. Nach dem gleichen Zeitregime werden die anderen Düsen 2.2-2.4 anschließend sequenziell geöffnet. Das vom Flusssensor 10 pro Öffnungszeit jeweils erfasste Durchflussvolumen generiert ein Signal, das jeweils einem Mikroventil 4 und einer Öffnungszeit zugeordnet abgespeichert wird. Durch Interpolation der Messwerte (Signale) kann für jeden Dispensierkanal 1 eine Messkurve erstellt werden, über die jeder Öffnungszeit individuell für den jeweiligen Dispensierkanal 1 ein Durchflussvolumen zugeordnet werden kann. Toleranzen der einzelnen Dispensierkanäle 1 zueinander führen dazu, dass der Flusssensor 10 das gleiche Durchflussvolumen für die einzelnen Dispensierkanäle 1 nach unterschiedlicher Zeitdauer misst, so dass unterschiedliche Messkurven entstehen. Entsprechend werden beim Dispensiervorgang die einzelnen Ventile 11 unterschiedlich lang geöffnet, um ein gleiches Volumen abzugeben. Örtliche Toleranzen werden damit in ihrem Einfluss auf den Variationskoeffizienten der Dispensierkanäle zueinander ausgeschlossen. Eine Kalibrierung des Flusssensors 10 ist nicht notwendig, da die Kalibrierung für alle Dispensierkanäle 1 mit demselben Flusssensor 10 erfolgt. Die Kalibrierung mit einer Kalibrierflüssigkeit hat den Vorteil, dass keine wertvolle Dispensierflüssigkeit verloren geht. Es ist dem Fachmann allerdings klar, dass diese Kalibrierung die örtlichen Toleranzen nur dann wirklich ausschließen kann, wenn die Dispensierflüssigkeit in ihren physikalischen Eigenschaften, insbesondere der Viskosität nahezu der Kalibrierflüssigkeit entspricht.

Wie bereits erwähnt, kann eine Kalibrierung einer Vorrichtung nach dem ersten Ausführungsbeispiel auch mit der Dispensierflüssigkeit erfolgen (dargestellt in Fig. 1). Zu diesem Zweck müssen die Flüssigkeitssäulen der Kalibrierflüssigkeit und der Dispensierflüssigkeit aus Sicht des Flusssensors 10 vor den Mikroventilen 4 zusammentreffen, d.h. an jeweils beiden Zuführöffnungen 5, 6 der Mikroventile 4 steht die Dispensierflüssigkeit an. Das seitens der Zuführöffnungen 5 anstehende Volumen der Dispensierflüssigkeit muss dabei größer dem Volumen sein, welches zur Kalibrierung jeweils durch die Mikroventile 4 ausgelassen wird. Wird nun z.B. zur Kalibrierung des ersten Dispensierkanals 1.1 das erste Durchlassventil 7.1 geöffnet, während die anderen Durchlassventile 7.2 bis 7.4 geschlossen sind und Druckluft in das Kalibriermittelgefäß 9 eingeleitet, so wird die Dispensierflüssigkeit zurückgedrängt und durch die erste Düse 2.1 abgegeben, solange das erste Mikroventil 4geöffnet ist.
Unterstellt man, dass die Dispensierflüssigkeit eine höhere Viskosität hat als die Kalibrierflüssigkeit, so wird bei gleichem Druck die Fließgeschwindigkeit geringer und damit für ein gleiches Abgabevolumen die Öffnungszeit des Mikroventils 4.1 länger sein. Die einzelnen Dispensierkanäle 1 können so für unterschiedliche Dispensierflüssigkeiten aber auch für die gleiche Dispensierflüssigkeit kalibriert werden, ohne dass der Flusssensor 10 mit der Dispensierflüssigkeit in Kontakt kommt.

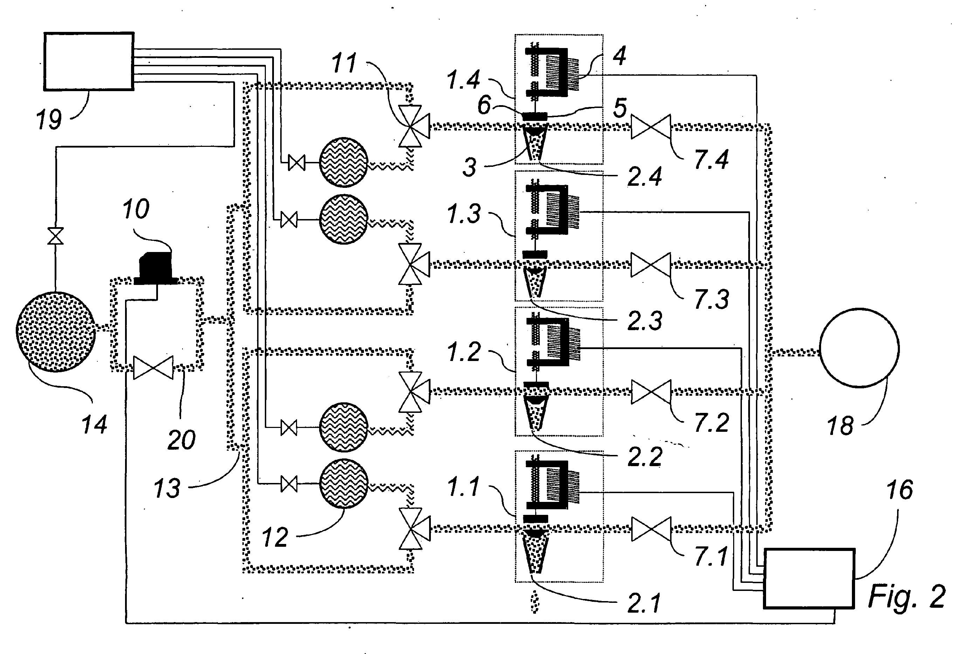

Ein zweites Ausführungsbeispiel, dargestellt in Fig. 2, soll sich im Wesentlichen dadurch zum ersten Ausführungsbeispiel unterscheiden, dass der Flusssensor 10 am Eingang des Spülmittelverteilers 13 angeordnet ist. Die Vorrichtung kann damit um den Teil der Kalibriermittelzuführung reduziert werden. Es ist grundsätzlich auch kein Mikroventil 4 mit zwei Zulauföffnungen 5, 6 notwendig. Allerdings ist seine Verwendung schon allein für die Entlüftung von Vorteil. Die Kalibrierung erfolgt, wie bereits beschrieben, für die einzelnen Dispensierkanäle 1 nacheinander, indem über die Spitzen 2 die Spülflüssigkeit abgegeben wird. Im Vergleich zur Kalibrierung mit einer Kalibrierflüssigkeit besteht hier der Nachteil darin, dass die Kalibrierung mit einer Flüssigkeit erfolgt, die ganz andere physikalische Eigenschaften haben kann als die Dispensierflüssigkeit. Der Aufwand für eine Vorrichtung gemäß dem zweiten Ausführungsbeispiel ist allerdings deutlich geringer als für eine solche nach dem ersten Ausführungsbeispiel.
Da die Empfindlichkeit des Flusssensors 10 mit der Durchflussgeschwindigkeit wächst, ist es von Vorteil den Pfadquerschnitt im Bereich des Flusssensors 10 zu verringern. Um trotzdem einen großen Durchfluss der Dispensierkanäle 1 mit Spülflüssigkeit zu ermöglichen, muss jedoch der Pfadquerschnitt gerade am Eingang des Spülmittelverteilers 13 groß sein. Vorteilhafterweise wird daher der Pfad aufgeteilt in einen Pfad kleinen Querschnitts, in dem der Flusssensor 10 eingebracht wird und einen parallel verlaufenden Pfad großen Querschnitts, den By-Pass 20.

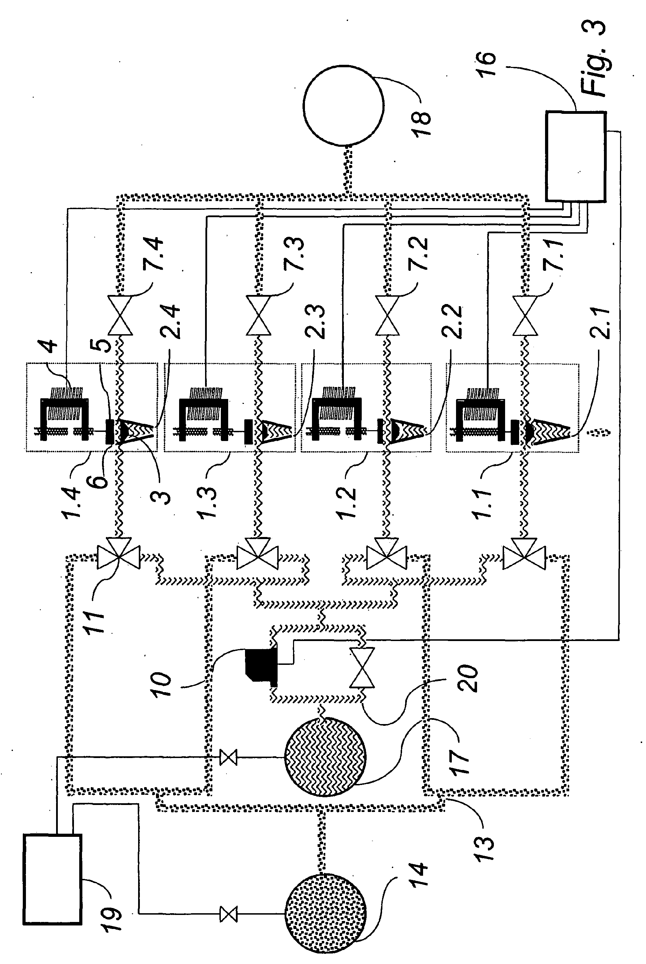

In einem dritten Ausführungsbeispiel, dargestellt in Fig. 3, soll gegenüber dem zweiten Ausführungsbeispiel nicht jedem Dispensierkanal 1 ein eigenes Dispensiermittelgefäß 12 zugeordnet sein, sondern es sollen alle Dispensierkanäle 1 aus einem gemeinsamen Dispensiermittelgefäß 17 gespeist werden. Statt der Alternative individuelle Dispensiermittelgefäße 12 oder ein gemeinsames Dispensiermittelgefäß 17 kann die Vorrichtung selbstverständlich auch mit beiden Versorgungsvarianten ausgestattet sein. Im Falle eines gemeinsamen Dispensiermittelgefäßes 17 bedarf es eines zum Spülmittelverteiler 13 analogen Dispensiermittelverteilers 15 für die Dispensierflüssigkeit. Der Flusssensor 10 soll sich entsprechend am Eingang des Dispensiermittelverteilers 15 befinden.

Grundsätzlich könnte auch pro Dispensierkanal 1, nahe den Zuführöffnungen 5 oder 6, jeweils ein Flusssensor 10 eingebracht werden. Der Vorteil der möglichen zeitgleichen Kalibrierung wiegt die Nachteile der Mehrkosten und des zusätzlichen Kalibrierungsaufwandes für die Flusssensoren 10 zueinander jedoch nicht auf.
Mit dem Einbringen eines Flusssensors 10 in eine Mehrkanaldosiervorrichtung wird die Möglichkeit geschaffen, ohne externe Kalibrierungsmittel die Vorrichtung einmalig vor Benutzungsbeginn oder auch beliebig mehrmalig z.B. nach dem Austauschen von Mikroventilen 4 oder Düsen 2 oder aber bei Verwendung anderer Dispensierflüssigkeiten sowie insbesondere in Prozesspausen zwischen dem Dispensieren von zwei Mikrotitrationsplatten zu kalibrieren und/oder die Verstopfung der Düsen zu überwachen.

### Aufstellung der verwendeten Bezugszeichen

- 1: Dispensierkanal
- 2: Düse
- 3: Auslassöffnung
- 4: Mikroventil
- 5: erste Zuführöffnung
- 6: zweite Zuführöffnung
- 7: Durchlassventil
- 8: Kalibriermittelverteiler
- 9: Kalibriermittelgefäß
- 10: Flusssensor
- 11: Ventil
- 12: Dispensiermittelgefäß
- 13: Spülmittelverteiler
- 14: Spülmittelgefäß
- 15: Dispensiermittelverteiler
- 16: Steuereinheit
- 17: gemeinsames Dispensiermittelgefäß
- 18: Spülmittelsammelbehälter
- 19: Druckquelle
- 20: By-Pass

## Patentansprüche

1. Mehrkanaldosiervorrichtung mit automatischer Kalibrierung mit mehreren Dispensierkanälen (1) jeweils mit einer Düse (2) und einem Mikroventil (4), wobei die Mikroventile (4) jeweils eine Auslassöffnung (3) aufweisen, die jeweils mit einer der Düsen (2) in Verbindung steht und jeweils wenigstens eine Zuführöffnung (5 oder 6) an den Mikroventilen (4) vorhanden ist, die jeweils mit einem Ausgang eines Verteilers (8, 13 oder 15) verbunden ist, dessen Eingang mit einem mit einer Flüssigkeit gefüllten Gefäß (9, 14 oder 17) in Verbindung steht und die Pfade zwischen dem Eingang und den Ausgängen des Verteilers einen gleichen fluidischen Widerstand aufweisen sowie einer Druckquelle (19) zur Erzeugung eines Überdrucks im Gefäß (9, 14 oder 17) und einer mit den Mikroventilen (4) verbundenen Steuereinheit (16) **dadurch gekennzeichnet,**
**dass** in der Verbindung zwischen dem Eingang des Verteilers (8, 13 oder 15) und dem Gefäß (9, 14 oder 17) ein Flusssensor (10) vorhanden ist, der mit der Steuereinheit (16) verbunden ist und diese so ausgelegt ist, dass sie für die Mikroventile (4) individuelle Steuersignale aus den vom Flusssensor (10) erhaltenen Messwerten generiert.

2. Mehrkanaldosiervorrichtung nach Anspruch 1, **dadurch gekennzeichnet,**
**dass** die Zuführöffnungen (5 oder 6) erste Zuführöffnungen (5) und zweite Zuführöffnungen (6) sind, wobei die ersten Zuführöffnungen (5) jeweils mit einem Ausgang des Verteilers (8, 13 oder 15) verbunden sind, der hier ein bis zu den ersten Zuführöffnungen (5) hin mit Kalibriermittel gefüllter Kalibriermittelverteiler (8) ist, und die zweiten Zuführöffnungen (6) jeweils eine Verbindung mit jeweils einem bis zu den zweiten Zuführöffnungen (6) hin mit Dispensierflüssigkeit gefüllten Dispensiermittelgefäß (12) aufweisen, wodurch bei Beaufschlagung des Gefäßes (9, 14 oder 17), das hier ein Kalibriermittelgefäß (9) ist, mit Druck über ein geöffnetes Mikroventil (4) Kalibrierflüssigkeit abgegeben wird, um die Dispensierkanäle zueinander mit der Kalibrierflüssigkeit zu kalibrieren.

3. Mehrkanaldosiervorrichtung nach Anspruch 1, **dadurch gekennzeichnet,**
**dass** die Zuführöffnungen (5 oder 6) erste Zuführöffnungen (5) und zweite Zuführöffnungen (6) sind, wobei die ersten Zuführöffnungen (5) jeweils mit einem Ausgang des Verteilers (8, 13 oder 15) verbunden sind, der hier ein bis zu den ersten Zuführöffnungen (5) hin mit Kalibriermittel gefüllter Kalibriermittelverteiler (8) ist, und die zweiten Zuführöffnungen (6) jeweils eine Verbindung mit jeweils einem bis zu den zweiten Zuführöffnungen (6) hin mit Dispensierflüssigkeit gefüllten Dispensiermittelgefäß (12) aufweisen, wodurch bei Beaufschlagung des Gefäßes (9, 14 oder 17), das hier ein Kalibriermittelgefäß (9) ist, mit Druck über ein geöffnetes Mikroventil (4) Dispensierflüssigkeit abgegeben wird, um die Dispensierkanäle (1) zueinander mit unterschiedlichen Dispensierflüssigkeiten zu kalibrieren.

4. Mehrkanaldosiervorrichtung nach Anspruch 1, **dadurch gekennzeichnet,**
**dass** der Verteiler (8, 13 oder 15) ein Spülmittelverteiler (13) ist und das Gefäß (9, 14 oder 17) ein Spülmittelgefäß (14) ist und beide miteinander mittelbar verbunden sind, wodurch parallel zum Durchfluss durch den Flusssensor (10) ein By-Pass (20) vorhanden ist, der ein hohes Durchsatzvolumen der Spülflüssigkeit ermöglicht.

## Claims

1. Multi-channel metering device with automatic calibration, comprising a multiplicity of dispensing channels (1), each comprising a nozzle (2) and a micro-valve (4), wherein each of said micro-valves (4) has an outlet opening (3) which is connected to one of the nozzles (2), and there is at least one supply opening (5 or 6) each on the micro-valves (4) which is connected to a respective outlet of a distributor (8, 13 or 15) whose inlet is in communication with a container (9, 14 or 17) filled with a liquid, and the paths between the inlet and the outlets of said distributor have the same fluidic resistance, as well as a pressure source (19) for generating a positive pressure in the container (9, 14 or 17), and a control unit (16) connected to the micro-valves (4),
**characterized in that**,
in the connection between the inlet of the distributor (8, 13 or 15) and the container (9, 14 or 17) a flow sensor (10) is present, which is connected to the control unit (16), and the latter is designed such that it generates individual control signals for the micro-valves (4) from the measured values received from the flow sensor (10).

2. Multi-channel metering device according to claim 1, **characterized in that** the supply openings (5 or 6) are first supply openings (5) and second supply openings (6), said first supply openings (5) each being connected to an outlet of the distributor (8, 13 or 15) which is a calibrating-medium distributor (8) here, filled with calibrating medium up to the first supply openings (5), and said second supply openings (6) each being connected to a dispensing medium container (12) filled with dispensing liquid up to the second supply openings (6), so that calibrating liquid is dispensed through an opened micro-valve (4) upon application of pressure to the container (9, 14 or 17), which is a calibrating-medium container (9) here, so as to calibrate the dispensing channels relative to each other with the calibrating liquid.

3. Multi-channel metering device according to claim 1, **characterized in that** the supply openings (5 or 6) are first supply openings (5) and second supply openings (6), said first supply openings (5) each being connected to an outlet of the distributor (8, 13 or 15), which is a calibrating-medium distributor (8) here, filled with calibrating medium up to the first supply openings (5), and said second supply openings (6) each being connected to a respective dispensing-medium container (12), which is filled with dispensing liquid up to the second supply openings (6), so that dispensing liquid is dispensed through an opened micro-valve (4) upon application of pressure to the container (9, 14 or 17), which is a calibrating-medium container (9) here, so as to calibrate the dispensing channels (1) relative to each other with different dispensing liquids.

4. Multi-channel metering device according to claim 1, **characterized in that** the distributor (8, 13 or 15) is a rinsing agent distributor (13) and the container (9, 14 or 17) is a rinsing agent container (14) and both are indirectly connected to each other, so that a bypass (20) is present, which is parallel to the flow through the flow sensor (10) and enables a high throughput of the rinsing liquid.

## Revendications

1. Dispositif de dosage multicanaux avec calibrage automatique, comportant plusieurs canaux de distribution (1), dont chacun comporte une buse (2) et une microsoupape (4), chacune desdites microsoupapes (4) présentant un orifice de sortie (3) en communication avec une buses (2) correspondante, et chacune des microsoupapes étant pourvues d'au moins un orifice d'alimentation (5 ou 6) en communication avec une sortie correspondante d'un distributeur (8, 13 ou 15) dont l'entrée est en communication avec un récipient (9, 14 ou 17) rempli d'un liquide, et les trajets entre l'entrée et les sorties dudit distributeur présentant une même résistance fluidique, ainsi qu'une source de pression (19) destinée à produire une surpression dans ledit récipient (9, 14 ou 17), et une unité de commande (16) qui est reliée aux microsoupapes (4), ledit dispositif étant
**caractérisé en ce que**,
dans la communication entre l'entrée du distributeur (8, 13 ou 15) et le récipient (9, 14 ou 17), il y a un capteur de débit (10) qui est relié à l'unité de commande (16), cette dernière étant adaptée à produire des signaux de commande individuels pour les microsoupapes (4) à partir des valeurs mesurées reçues du capteur de débit (10).

2. Dispositif de dosage multicanaux selon la revendication 1, **caractérisé en ce que** les orifices d'alimentation (5 ou 6) sont des premiers orifices d'alimentation (5) et des deuxièmes orifices d'alimentation (6), lesdits premiers orifices d'alimentation (5) étant respectivement reliés à une sortie du distributeur (8, 13 ou 15) qui est ici un distributeur (8) d'agent de calibrage rempli d'agent de calibrage jusqu'aux premiers orifices d'alimentation (5), et lesdits deuxièmes orifices d'alimentation (6) présentant chacun une connexion à un récipient (12) d'agent à distribuer qui est rempli jusqu'aux deuxièmes orifices d'alimentation (6) d'un liquide à distribuer, de sorte que du liquide de calibrage est distribué à travers une microsoupape (4) ouverte lorsque ledit récipient (9, 14 ou 17), qui est ici un récipient (9) d'agent de calibrage, est alimenté en pression, afin de calibrer les canaux de distribution, les uns aux autres, avec le liquide de calibrage.

3. Dispositif de dosage multicanaux selon la revendication 1, **caractérisé en ce que** les orifices d'alimentation (5 ou 6) sont des premiers orifices d'alimentation (5) et des deuxièmes orifices d'alimentation (6), lesdits premiers orifices d'alimentation (5) étant respectivement reliés à une sortie du distributeur (8, 13 ou 15) qui est ici un distributeur (8) d'agent de calibrage rempli d'agent de calibrage jusqu'aux premiers orifices d'alimentation (5), et lesdits deuxièmes orifices d'alimentation (6) présentant chacun une connexion à un récipient (12) d'agent à distribuer qui est rempli jusqu'aux deuxièmes orifices d'alimentation (6) d'un liquide à distribuer, de sorte que du liquide à distribuer est distribué à travers une microsoupape (4) ouverte lorsque ledit récipient (9, 14 ou 17), qui est ici un récipient (9) d'agent de calibrage, est alimenté en pression, afin de calibrer les canaux de distribution (1), les uns aux autres, avec des liquides différentes à distribuer.

4. Dispositif de dosage multicanaux selon la revendication 1, **caractérisé en ce que** le distributeur (8, 13 ou 15) est un distributeur (13) de fluide de lavage et le récipient (9, 14 ou 17) est un récipient (14) d'agent de lavage, et que tous les deux sont reliés entre eux indirectement de sorte qu'il y a une dérivation (20) qui est parallèle au débit passant à travers le capteur de débit (10) et qui permet un grand débit dudit fluide de lavage.
